# EUROPEAN PATENT APPLICATION

(11) **EP 4 588 974 A1**
(43) Date of publication of application: **23.07.2025**
(21) Application number: 24865734.8
(22) Date of filing: 30.08.2024
(51) Int. Cl.: C08L 25/12, C08L 51/04, C08L 55/02

(54) **ASA-BASED RESIN COMPOSITION, METHOD FOR PRODUCING SAME, AND MOLDED PRODUCT COMPRISING SAME**

(30) Priority: 14.09.2023 KR 20230122495
(71) Applicant: LG CHEM, LTD., Seoul 07336 (KR)
(72) Inventor: KIM, Hyunmin, Daejeon 34122 (KR); KIM, Tae Hoon, Daejeon 34122 (KR); HAN, Seunghun, Daejeon 34122 (KR)
(74) Representative: Goddar, Heinz J.
(86) International application number: PCT/KR2024/012997
(87) International publication number: WO 2025/058293

(57) **Abstract**

The present invention relates to an ASA-based resin composition, a method of preparing the same, and a molded article including the same. According to the present invention, the present invention has an effect of providing an ASA-based resin composition having eco-friendly characteristics without deterioration of mechanical properties such as impact strength and hardness and the physical property balance between heat resistance and weather resistance and a molded article including the ASA-based resin composition.

## Description

### [Technical Field]

### [Cross-Reference to Related Application]

This application claims priority to Korean Patent Application No. 10-2023-0122495, filed on September 14, 2023, in the Korean Intellectual Property Office, the disclosure of which is incorporated herein by reference.

The present invention relates to an ASA-based resin composition, a method of preparing the same, and a molded article including the same. More particularly, the present invention relates to an ASA-based resin composition having eco-friendly characteristics and being capable of preventing deterioration of mechanical properties such as impact strength and hardness and the physical property balance between heat resistance and weather resistance, a method of preparing the ASA-based resin composition, and a molded article including the ASA-based resin composition.

### [Background Art]

Acrylate-styrene-acrylonitrile graft copolymers (hereinafter referred to as 'ASA resin') have weather resistance, aging resistance, chemical resistance, and processability, and thus are widely used in automobiles, home appliances, leisure goods, construction materials, gardening goods, and building materials.

To obtain eco-friendly characteristics and reduce manufacturing costs, research has been actively conducted on mixing an ASA resin with a recycled ASA resin. However, it is difficult to recover a discarded ASA resin. In addition, the recovered discarded ASA resin has poor weather resistance, which limits recycling thereof.

Accordingly, there is a need to develop an ASA-based resin composition that is capable of imparting eco-friendly characteristics to an ASA resin, reducing manufacturing costs, and preventing deterioration of mechanical properties and physical property balance and is abundant.

### [Related Art Documents]

### [Patent Documents]

KR 2022-0084326 A

### [Disclosure]

### [Technical Problem]

Therefore, the present invention has been made in view of the above problems, and it is one object of the present invention to provide an ASA-based resin composition capable of implementing mechanical strength suitable for automobile exterior materials and excellent physical property balance between heat resistance and weather resistance and a method of preparing the ASA-based resin composition.

It is another object of the present invention to provide a molded article manufactured using the ASA-based resin composition.

The above and other objects can be accomplished by the present invention described below.

### [Technical Solution]

In accordance with one aspect of the present invention, provided is an ASA-based resin composition including:
an acrylate-aromatic vinyl compound-vinyl cyanide compound graft copolymer (A); a styrene-based copolymer (B); and a post-consumer recycled ABS resin (C),
wherein the post-consumer recycled ABS resin (C) is included in an amount of 20 to 70 % by weight.

The acrylate-aromatic vinyl compound-vinyl cyanide compound graft copolymer (A) may include an acrylate-aromatic vinyl compound-vinyl cyanide compound graft copolymer (A-1) containing an acrylate rubber having an average particle diameter of 200 to 320 nm and an acrylate-aromatic vinyl compound-vinyl cyanide compound graft copolymer (A-2) containing an acrylate rubber having an average particle diameter of 40 to 109 nm.

The styrene-based copolymer (B) may be a mixture of a styrene-based copolymer (B-1) having a weight average molecular weight of 80,000 to 100,000 g/mol and a styrene-based copolymer (B-2) having a weight average molecular weight of 150,000 to 200,000 g/mol.

The post-consumer recycled ABS resin (C) may include 55 to 65 parts by weight of an aromatic vinyl monomer, 10 to 20 parts by weight of a diene rubber, and 15 to 25 parts by weight of a vinyl cyanide compound, or may have a weight average molecular weight of 100,000 to 300,000 g/mol, or may be a mechanically recycled resin.

The acrylate-aromatic vinyl compound-vinyl cyanide compound graft copolymer (A-1) containing an acrylate rubber having an average particle diameter of 200 to 320 nm and the acrylate-aromatic vinyl compound-vinyl cyanide compound graft copolymer (A-2) containing an acrylate rubber having an average particle diameter of 40 to 109 nm may be included in a weight ratio (A-1:A-2) of 1:0.8 to 1:1.5.

Based on 100 % by weight in total thereof, the acrylate-aromatic vinyl compound-vinyl cyanide compound graft copolymer (A-1) containing an acrylate rubber having an average particle diameter of 200 to 320 nm may include 30 to 50 % by weight of an acrylate rubber, 40 to 60 % by weight of an aromatic vinyl compound, and 5 to 20 % by weight of a vinyl cyanide compound.

Based on 100 % by weight in total thereof, the acrylate-aromatic vinyl compound-vinyl cyanide compound graft copolymer (A-2) containing an acrylate rubber having an average particle diameter of 40 to 109 nm may include 40 to 60 % by weight of an acrylate rubber, 25 to 45 % by weight of an aromatic vinyl compound, and 5 to 20 % by weight of a vinyl cyanide compound.

Based on 100 % by weight in total thereof, the styrene-based copolymer (B-1) having a weight average molecular weight of 80,000 to 100,000 g/mol may include 55 to 75 % by weight of an aromatic vinyl compound and 25 to 45 % by weight of a vinyl cyanide compound.

Based on 100 % by weight in total thereof, the styrene-based copolymer (B-2) having a weight average molecular weight of 150,000 to 200,000 g/mol may include 60 to 80 % by weight of an aromatic vinyl compound and 20 to 40 % by weight of a vinyl cyanide compound.

The ASA-based resin composition may have a melt flow index (220 °C, load: 10 kg) of 8.8 to 9.8 g/10 minutes as measured according to ISO 1133, an Izod impact strength of 10.1 to 10.7 kJ/m² as measured according to ISO 179, an HDT of 84.2 to 86 °C as measured according to ISO 75-1,2, a hardness of 102 to 104 as measured according to ISO 2039, or a weather resistance (SCI ΔE) of 0.99 to 1.63 as measured using an SAE J2527 evaluation method.

In accordance with another aspect of the present invention, provided is an ASA-based resin composition including:
5 to 22 % by weight of an acrylate-aromatic vinyl compound-vinyl cyanide compound graft copolymer (A-1) containing an acrylate rubber having an average particle diameter of 200 to 320 nm;
5 to 25 % by weight of an acrylate-aromatic vinyl compound-vinyl cyanide compound graft copolymer (A-2) containing an acrylate rubber having an average particle diameter of 40 to 109 nm;
30 to 60 % by weight of a styrene-based copolymer (B-1) having a weight average molecular weight of 80,000 to 100,000 g/mol;
0 to 15 % by weight of a styrene-based copolymer (B-2) having a weight average molecular weight of 150,000 to 200,000 g/mol; and
20 to 35 % by weight of an aromatic vinyl compound-conjugated diene compound-vinyl cyanide compound graft copolymer (C).

The aromatic vinyl compound-conjugated diene compound-vinyl cyanide compound graft copolymer (C) may have a melt-volume flow rate (MVR) of 10 cm³/10 min or more as measured at 220 °C and 10 kg using polymer melt according to ISO 1133-1:2011; a Vicat B/50 softening point of 80 °C or higher as measured according to ISO 306:2004; an E-modulus of 1500 MPa or more as measured according to ISO 527; a stress-at-yield of 30 MPa or more as measured according to ISO 527; a strain-at-yield of 2 % or more as measured according to ISO 527; a Charpy notch impact strength of 2 kJ/m² or more as measured according to notch type A at 23 °C according to EN-ISO 179-1; or a Charpy notch impact strength of 2 kJ/m² or more as measured according to notch type A at -30 °C according to EN-ISO 179-1.

In accordance with still another aspect of the present invention, provided is an ASA-based resin composition including an acrylate-aromatic vinyl compound-vinyl cyanide compound graft copolymer and a vinyl cyanide compound-conjugated diene compound-aromatic vinyl compound graft copolymer, wherein the ASA-based resin composition includes 11 to 15 % by weight of an alkyl acrylate, 26 to 34 % by weight of an aromatic vinyl compound, and 25 to 33 % by weight of an alkyl-substituted aromatic vinyl compound.

In accordance with still another aspect of the present invention, provided is an ASA-based resin composition including an acrylate-aromatic vinyl compound-vinyl cyanide compound graft copolymer and a vinyl cyanide compound-conjugated diene compound-aromatic vinyl compound graft copolymer, wherein the ASA-based resin composition includes 10 to 20 % by weight of an alkyl acrylate, 20 to 40 % by weight of an aromatic vinyl compound, 20 to 30 % by weight of a vinyl cyanide compound, 1 to 10 % by weight of a conjugated diene compound, and 20 to 40 % by weight of an alkyl-substituted aromatic vinyl compound.

In accordance with still another aspect of the present invention, provided is an ASA-based resin composition including an acrylate-aromatic vinyl compound-vinyl cyanide compound graft copolymer and a vinyl cyanide compound-conjugated diene compound-aromatic vinyl compound graft copolymer, wherein the ASA-based resin composition includes 11 to 15 % by weight of an alkyl acrylate, 26 to 34 % by weight of an aromatic vinyl compound, 23 to 24 % by weight of a vinyl cyanide compound, 3 to 6 % by weight of a conjugated diene compound, and 25 to 33 % by weight of an alkyl-substituted aromatic vinyl compound.

In accordance with still another aspect of the present invention, provided is an ASA-based resin composition including an acrylate-aromatic vinyl compound-vinyl cyanide compound graft copolymer and a vinyl cyanide compound-conjugated diene compound-aromatic vinyl compound graft copolymer, wherein the ASA-based resin composition includes 13 to 15 % by weight of an alkyl acrylate, 27 to 32 % by weight of an aromatic vinyl compound, 23 to 24 % by weight of a vinyl cyanide compound, 3 to 6 % by weight of a conjugated diene compound, and 27 to 32 % by weight of an alkyl-substituted aromatic vinyl compound.

In accordance with still another aspect of the present invention, provided is a method of preparing an ASA-based resin composition, including:
kneading and extruding, at 200 to 300 °C and 300 to 800 rpm, 5 to 22 % by weight of an acrylate-aromatic vinyl compound-vinyl cyanide compound graft copolymer (A-1) containing an acrylate rubber having an average particle diameter of 200 to 320 nm; 5 to 25 % by weight of an acrylate-aromatic vinyl compound-vinyl cyanide compound graft copolymer (A-2) containing an acrylate rubber having an average particle diameter of 40 to 109 nm; 30 to 60 % by weight of a styrene-based copolymer (B-1) having a weight average molecular weight of 80,000 to 100,000 g/mol; 0 to 15 % by weight of a styrene-based copolymer (B-2) having a weight average molecular weight of 150,000 to 200,000 g/mol; and 20 to 35 % by weight of a post-consumer recycled ABS resin (C).

In accordance with yet another aspect of the present invention, provided is a molded article including the above-described ASA-based resin composition.

The molded article may be an automobile part, including an automobile exterior material.

### [Advantageous Effects]

An ASA-based resin composition according to the present invention is environmentally friendly. In addition, the ASA-based resin composition of the present invention has mechanical strength, such as impact strength and hardness, equivalent to or superior to that of conventional ASA-based resin compositions and has excellent physical property balance between heat resistance and weather resistance. Accordingly, the ASA-based resin composition of the present invention can be used as a material for automobile parts.

Accordingly, the ASA-based resin composition according to the present invention and a molded article manufactured using the same can be widely applied to unpainted automobile parts including radiator grille and pillar parts.

### [Best Mode]

Hereinafter, the present invention will be described in more detail to help understand the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

The present inventors confirmed that, when a post-consumer recycled ABS was included in an ASA-based resin, mechanical strength suitable for use as a material for automobile parts and the physical property balance between heat resistance and weather resistance were implemented. Based on these findings, the present inventors conducted further study to complete the present invention.

The ASA-based resin composition according to the present invention includes a post-consumer recycled ABS resin.

In the present disclosure, a post-consumer recycled ABS resin commonly known in the art to which the present invention pertains may be used as the "post-consumer recycled ABS resin" of the present invention without particular limitation. For example, the post-consumer recycled ABS resin may be a mechanically recycled resin having high purity, obtained by changing the physical structure of waste ABS resin with a weight average molecular weight of 100,000 to 300,000 g/mol without changing the chemical structure thereof, sorting a raw material, removing impurities, and performing a washing process.

Hereinafter, each component of an ASA-based resin composition of the present invention is described in detail.

### Post-consumer recycled ABS resin

In one embodiment of the present invention, the post-consumer recycled ABS resin may be an ABS resin obtained from discarded automobile equipment, household appliances, and electrical equipment, or an ABS resin obtained by recycling defective products discarded during the manufacturing process.

As a specific example, the post-consumer recycled ABS resin may exhibit one or more of the following characteristics.
- Melt-volume flow rate (MVR) measured at 220 °C and 10 kg using polymer melt according to ISO 1133-1:2011: 10 cm³/10 min or more, or 10 to 35 cm³/10 min
- Vicat B/50 softening point measured according to ISO 306:2004: 80 °C or higher, or 80 to 100 °C
- E-modulus measured according to ISO 527: 1500 MPa or more, or 2000 MPa or more
- Stress-at-yield measured according to ISO 527: 30 MPa or more, or 30 to 50 Mpa
- Strain-at-yield measured according to ISO 527: 2 % or more, or 2 to 3 %
- Charpy notch impact strength measured according to notch type A at 23 °C according to EN-ISO 179-1: 2 kJ/m² or more, or 2 to 20 kJ/m²
- Charpy notch impact strength measured according to notch type A at -30 °C according to EN-ISO 179-1: 2 kJ/m² or more, or 2 to 20 kJ/m²

For example, the post-consumer recycled ABS resin may be a recycled ABS resin including 55 % by weight or more or 55 to 65 % by weight of an aromatic vinyl monomer, 10 % by weight or more or 10 to 20 % by weight of a diene rubber, and 15 % by weight or more or 15 to 25 % by weight of a vinyl cyanide compound. Within this range, despite being included in the ASA-based resin composition, excellent mechanical properties and excellent physical property balance between heat resistance and weather resistance may be provided.

For example, the post-consumer recycled ABS resin may have a weight average molecular weight of 100,000 g/mol or more or 100,000 to 300,000 g/mol. Within this range, mechanical properties may be improved.

When measuring weight average molecular weight, a sample having a concentration of 1 wt% is prepared by putting tetrahydrofuran (THF) and a compound in a 1 ml glass bottle. Then, after filtering a standard sample (polystyrene) and the sample through a filter (pore size: 0.45 µm), the filtered samples are injected into a GPC injector. Then, the molecular weight and molecular weight distribution of the compound may be obtained by comparing the elution time of the sample with the calibration curve of the standard sample. At this time, Infinity II 1260 (Agilient Co.) may be used as measuring instrument, and flow rate may be set to 1.00 mL/min and column temperature may be set to 40.0 °C.

The post-consumer recycled ABS resin may be a mechanically recycled resin obtained by changing the physical structure without changing the chemical structure, sorting a raw material, and performing reprocessing.

The raw material sorting process may be the process of collecting waste home appliances, washing the waste home appliances, and sorting the waste home appliances by component and color.

The reprocessing may involve pelletizing the sorted recycled ABS resin using an extruder.

Based on 100 % by weight in total of the ASA-based resin composition, the post-consumer recycled ABS resin may be included in an amount of 20 to 35 % by weight, preferably 20 to 32 % by weight, more preferably 22 to 32 % by weight, still more preferably 22 to 26 % by weight. When included in an amount less than the range, the environmentally friendly concept is fading as the content of post-consumer recycled ABS resin decreases. When included in an amount exceeding the range, mechanical properties and appearance quality may be poor.

As long as a post-consumer recycled ABS resin conforms to the definition of the present invention, without any special limitation, the post-consumer recycled ABS resin may be prepared using methods known in the art and used, and commercially available products may be used.

### Virgin resin

For example, a virgin resin constituting the ASA-based resin composition may include an acrylate-aromatic vinyl compound-vinyl cyanide compound graft copolymer (A-1) containing an acrylate rubber having an average particle diameter of 200 to 320 nm; an acrylate-aromatic vinyl compound-vinyl cyanide compound graft copolymer (A-2) containing an acrylate rubber having an average particle diameter of 40 to 109 nm; and one or more styrene-based copolymers (B).

As a specific example, the virgin resin constituting the ASA-based resin composition may include an acrylate-aromatic vinyl compound-vinyl cyanide compound graft copolymer (A-1) containing an acrylate rubber having an average particle diameter of 200 to 320 nm; an acrylate-aromatic vinyl compound-vinyl cyanide compound graft copolymer (A-2) containing an acrylate rubber having an average particle diameter of 40 to 109 nm; and a first styrene-based copolymer (B-1) having a weight average molecular weight of 80,000 to 100,000 g/mol.

As another example, the virgin resin constituting the ASA-based resin composition may include an acrylate-aromatic vinyl compound-vinyl cyanide compound graft copolymer (A-1) containing an acrylate rubber having an average particle diameter of 200 to 320 nm; an acrylate-aromatic vinyl compound-vinyl cyanide compound graft copolymer (A-2) containing an acrylate rubber having an average particle diameter of 40 to 109 nm; the first styrene-based copolymer (B-1) having a weight average molecular weight of 80,000 to 100,000 g/mol; and a second styrene-based copolymer (B-2) having a weight average molecular weight of 150,000 to 200,000 g/mol.

In this case, despite including the post-consumer recycled ABS resin, excellent mechanical properties and excellent physical property balance between heat resistance and weather resistance may be provided.

Hereinafter, each component of the virgin resin constituting the ASA-based resin composition of the present invention is described in detail.

### (A-1) Acrylate-aromatic vinyl compound-vinyl cyanide compound graft copolymer containing acrylate rubber having average particle diameter of 200 to 320 nm

The acrylate rubber of the graft copolymer (A-1) may have an average particle diameter of 200 to 320 nm, preferably 220 to 300 nm, more preferably 240 to 280 nm. Within this range, mechanical strength such as impact strength may be excellent.

In the present disclosure, the average particle diameter is measured by dynamic light scattering. Specifically, the average particle diameter is measured as an intensity value using a Nicomp 380 particle size analyzer (manufacturer: PSS) in a Gaussian mode. As a specific measurement example, a sample is prepared by diluting 0.1 g of latex (total solids content: 35 to 50 wt%) 1,000 to 5,000-fold with distilled water. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C, measurement wavelength: 632.8 nm, and channel width: 10 µsec.

For example, based on 100 % by weight in total of all components constituting the virgin resin, the graft copolymer (A-1) may be included in an amount of 5 to 22 % by weight, 10 to 22 % by weight, 15 to 22 % by weight, or 18 to 21 % by weight. Within this range, fluidity and weather resistance equivalent to or superior to those of conventional ASA-based resin compositions may be achieved, and appearance quality may be excellent.

For example, based on 100 % by weight in total thereof, the graft copolymer (A-1) may include 30 to 50 % by weight of an acrylate rubber, 40 to 60 % by weight of an aromatic vinyl compound, and 5 to 20 % by weight of a vinyl cyanide compound, preferably 35 to 50 % by weight of an acrylate rubber, 40 to 55 % by weight of an aromatic vinyl compound, and 10 to 20 % by weight of a vinyl cyanide compound. Within this range, mechanical strength such as impact strength may be excellent.

In the present disclosure, a polymer including a certain compound means a polymer prepared by polymerizing the compound, and a unit in the polymer is derived from the compound.

The acrylate rubber may include an alkyl acrylate compound.

In the present disclosure, the alkyl acrylate compound may include an alkyl acrylate containing an alkyl group having 1 to 15 carbon atoms, preferably one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing a chain alkyl group having 1 to 4 carbon atoms, still more preferably butyl acrylate.

In the present disclosure, for example, the aromatic vinyl compound may include one or more selected from the group consisting of styrene, α-methyl styrene, o-methyl styrene, ρ-methyl styrene, m-methyl styrene, ethyl styrene, isobutyl styrene, t-butyl styrene, o-bromo styrene, ρ-bromo styrene, m-bromo styrene, o-chloro styrene, ρ-chloro styrene, m-chloro styrene, vinyltoluene, vinylxylene, fluorostyrene, and vinylnaphthalene, preferably one or more selected from the group consisting of styrene and α-methyl styrene, still more preferably styrene. In this case, due to the appropriate fluidity, processability and mechanical properties such as impact resistance may be excellent.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

For example, the graft copolymer (A-1) may be prepared by emulsion polymerization. In this case, mechanical strength such as impact strength may be excellent.

An emulsion graft polymerization method commonly practiced in the art to which the present invention pertains may be used to perform the emulsion polymerization of the present invention without particular limitation.

### (A-2) Acrylate-aromatic vinyl compound-vinyl cyanide compound graft copolymer containing acrylate rubber having average particle diameter of 40 to 109 nm

For example, the acrylate rubber of the graft copolymer (A-2) may have an average particle diameter of 40 to 109 nm, preferably 40 to 100 nm, more preferably 50 to 100 nm, still more preferably 60 to 100 nm. Within this range, excellent impact strength and gloss may be imparted to the finally prepared ASA-based resin composition.

For example, based on 100 % by weight in total of all components constituting the virgin resin, the graft copolymer (A-2) may be included in an amount of 5 to 25 % by weight, preferably 10 to 25 % by weight, more preferably 15 to 25 % by weight, still more preferably 20 to 25 % by weight, still more preferably 23 to 25 % by weight. Within this range, fluidity and weather resistance equivalent to or superior to those of conventional ASA-based resin compositions may be achieved, and appearance quality may be excellent.

For example, based on 100 % by weight in total thereof, the graft copolymer (A-2) may include 40 to 60 % by weight of an acrylate rubber, 25 to 45 % by weight of an aromatic vinyl compound, and 5 to 20 % by weight of a vinyl cyanide compound, preferably 45 to 55 % by weight of an acrylate rubber, 30 to 45 % by weight of an aromatic vinyl compound, and 10 to 20 % by weight of a vinyl cyanide compound. Within this range, gloss and impact strength may be excellent.

The acrylate rubber may include an alkyl acrylate compound.

The alkyl acrylate compound, aromatic vinyl compound, and vinyl cyanide compound included in the graft copolymer (A-2) may be the same as the alkyl acrylate compound, aromatic vinyl compound, and vinyl cyanide compound included in the graft copolymer (A-1).

For example, the graft copolymer (A-2) may be prepared by emulsion polymerization. In this case, impact strength and gloss may be excellent.

An emulsion graft polymerization method commonly practiced in the art to which the present invention pertains may be used to perform the emulsion polymerization of the present invention without particular limitation.

Based on 100 % by weight in total of all components constituting the virgin resin, a total amount of the graft copolymer (A-1) and the graft copolymer (A-2) may be preferably 45 % by weight or less, 30 to 45 % by weight, more preferably 40 to 44 % by weight. Within this range, despite the post-consumer recycled ABS resin being included in the ASA-based resin composition, excellent mechanical properties and excellent physical property balance between heat resistance and weather resistance may be provided.

### (B-1) First styrene-based copolymer having weight average molecular weight of 80,000 to 100,000 g/mol

For example, the first styrene-based copolymer (B-1) may be an aromatic vinyl compound-vinyl cyanide compound copolymer.

For example, the aromatic vinyl compound-vinyl cyanide compound copolymer may have a weight average molecular weight of preferably 85,000 to 100,000 g/mol, more preferably 90,000 to 100,000 g/mol, still more preferably 92,000 to 98,000 g/mol. Within this range, impact strength and hardness may be excellent.

For example, based on 100 % by weight in total of all components constituting the virgin resin, the aromatic vinyl compound-vinyl cyanide compound copolymer (B-1) may be included in an amount of 30 to 60 % by weight, 35 to 60 % by weight, 40 to 60 % by weight, or 45 to 59 % by weight. Within this range, fluidity and appearance quality may be improved while maintaining impact resistance, heat resistance, and hardness.

For example, the aromatic vinyl compound-vinyl cyanide compound copolymer (B-1) may include an aromatic vinyl compound and a vinyl cyanide compound. In this case, impact resistance may be excellent, and deterioration of heat resistance and weather resistance may be prevented.

As a preferred example, based on 100 % by weight in total thereof, the aromatic vinyl compound-vinyl cyanide compound copolymer may include 55 to 75 % by weight of an aromatic vinyl compound and 25 to 45 % by weight of a vinyl cyanide compound, preferably 60 to 80 % by weight of an aromatic vinyl compound and 20 to 40 % by weight of a vinyl cyanide compound, still more preferably 65 to 75 % by weight of an aromatic vinyl compound and 25 to 35 % by weight of a vinyl cyanide compound. In this case, due to excellent fluidity, deterioration of appearance quality may be prevented.

The aromatic vinyl compound and vinyl cyanide compound included in the aromatic vinyl compound-vinyl cyanide compound copolymer (B-1) may be the same as the aromatic vinyl compound and vinyl cyanide compound included in the graft copolymer (A-1) of the present invention.

For example, the aromatic vinyl compound-vinyl cyanide compound copolymer (B-1) may be prepared by emulsion polymerization, solution polymerization, or bulk polymerization. In this case, heat resistance and fluidity may be excellent.

The emulsion polymerization, solution polymerization, and bulk polymerization may be performed by emulsion polymerization, solution polymerization, and bulk polymerization commonly practiced in the technical field to which the present invention pertains, without being limited thereto.

### (B-2) Second styrene-based copolymer having weight average molecular weight of 150,000 to 200,000 g/mol

For example, the second styrene-based copolymer (B-2) may be an aromatic vinyl compound-vinyl cyanide compound copolymer.

For example, the aromatic vinyl compound-vinyl cyanide compound copolymer may have a weight average molecular weight of preferably 150,000 to 200,000 g/mol, more preferably 155,000 to 195,000 g/mol, still more preferably 160,000 to 180,000 g/mol. Within this range, impact resistance and scratch resistance may be excellent.

For example, based on 100 % by weight in total of all components constituting the virgin resin, the aromatic vinyl compound-vinyl cyanide compound copolymer (B-2) may be included in an amount of 15 % by weight or less, 3 to 15 % by weight, or 5 to 15 % by weight. Within this range, fluidity and appearance quality may be improved while maintaining impact resistance, heat resistance, and hardness.

For example, based on 100 % by weight in total thereof, the aromatic vinyl compound-vinyl cyanide compound copolymer may include 60 to 80 % by weight of an aromatic vinyl compound and 20 to 40 % by weight of a vinyl cyanide compound, more preferably 65 to 80 % by weight of an aromatic vinyl compound and 20 to 35 % by weight of a vinyl cyanide compound, still more preferably 65 to 75 % by weight of an aromatic vinyl compound and 25 to 35 % by weight of a vinyl cyanide compound. In this case, due to excellent fluidity, deterioration of appearance quality may be prevented.

The aromatic vinyl compound and vinyl cyanide compound included in the aromatic vinyl compound-vinyl cyanide compound copolymer (B-2) may be the same as the aromatic vinyl compound and vinyl cyanide compound included in the graft copolymer (A-1) of the present invention.

For example, the aromatic vinyl compound-vinyl cyanide compound copolymer (B-2) may be prepared by emulsion polymerization, solution polymerization, or bulk polymerization. In this case, heat resistance and fluidity may be excellent.

The emulsion polymerization, solution polymerization, and bulk polymerization may be performed by emulsion polymerization, solution polymerization, and bulk polymerization commonly practiced in the technical field to which the present invention pertains, without being limited thereto.

### ASA-based resin composition

For example, the ASA-based resin composition may include (A-1) and (A-2) in a weight ratio of 1:0.8 to 1:1.5 or 1:0.8 to 1:1.5. In this case, despite including the post-consumer recycled ABS resin, excellent mechanical properties and excellent physical property balance between heat resistance and weather resistance may be provided.

For example, the ASA-based resin composition may further include a lubricant or the lubricant and additives.

The additives may include one or more selected from the group consisting of a lubricant, a heat stabilizer, a UV stabilizer, a fluorescent brightening agent, a chain extender, a release agent, a pigment, a dye, an antibacterial agent, a processing aid, a metal deactivator, a smoke suppressant, an inorganic filler, glass fiber, an antifriction agent, and an anti-wear agent.

For example, based on 100 % by weight of all components (A+B+C+additive) constituting the ABA-based resin composition, each of the additives may be further included in an amount of 0.01 to 5 % by weight, preferably 0.05 to 3 % by weight, more preferably 0.1 to 3 % by weight. In this case, the functions of the additives may be efficiently expressed without degrading the intrinsic physical properties of the ASA-based resin composition of the present invention.

For example, the lubricant may include one or more selected from the group consisting of an alkyl acrylate-based polymer, a styrene-acrylonitrile copolymer having a weight average molecular weight of 30,000 to 70,000 g/mol, an ethylene-based copolymer composed of ethylene and a comonomer, olefin-based wax, and an aliphatic amide-based compound, preferably may include one or more selected from the group consisting of an alkyl acrylate-based polymer, an styrene-acrylonitrile copolymer having a weight average molecular weight of 30,000 to 70,000 g/mol, and olefin-based wax, more preferably an alkyl acrylate-based polymer. In this case, physical property balance, scratch resistance, colorability, and appearance quality may be excellent.

For example, based on 100 % by weight of all components (A+B+C+lubricant) constituting the ABS-based resin composition, the lubricant may be included in an amount of 0.1 to 3 % by weight, preferably 0.5 to 2.5 % by weight, more preferably 0.7 to 2.2 % by weight. Within this range, impact resistance and fluidity may be excellent.

The alkyl acrylate-based polymer as a lubricant may include one or more selected from the group consisting of poly(methyl acrylate), poly(ethyl acrylate), and poly(butyl acrylate). In this case, the formation of mold deposits is suppressed, so that the appearance of a molded article may be attractive and high gloss may be achieved.

As the alkyl acrylate-based polymer as a lubricant, an alkyl acrylate-based lubricant commonly used in the art to which the present invention pertains may be used without particular limitation. Alternatively, the alkyl acrylate-based polymer may be prepared directly and used, or a commercially available product may be used.

The styrene-acrylonitrile copolymer as a lubricant may have a weight average molecular weight of preferably 40,000 to 67,000 g/mol, more preferably 50,000 to 65,000 g/mol, still more preferably 55,000 to 65,000 g/mol. Within this range, fluidity may be improved, thereby improving processability and appearance quality.

For example, the styrene-acrylonitrile copolymer as a lubricant may have a melt flow index (190 °C, 5 kg) of 20 to 60 g/10 min, preferably 25 to 55 g/10 min as measured according to ISO 1133. Within this range, impact strength, fluidity, and appearance quality may be excellent.

For example, the styrene-acrylonitrile copolymer as a lubricant may have a heat deflection temperature of 82 to 90 °C, preferably 84 to 88 °C as measured according to ASTM D648. Within this range, impact strength, fluidity, and appearance quality may be excellent.

For example, the ethylene copolymer may include one or more selected from the group consisting of an ethylene/1-butene copolymer and an ethylene/n-butyl acrylate/carbon monoxide ternary copolymer. In this case, heat resistance, fluidity, and appearance quality may be excellent.

For example, the olefin-based wax may include one or more selected from the group consisting of polyethylene wax and polypropylene wax, preferably polyethylene wax. In this case, heat resistance, fluidity, and appearance quality may be excellent.

For example, the aliphatic amide-based compound may include one or more selected from the group consisting of stearamide, behanamide, ethylene bis(stearamide), N,N'-ethylene bis(12-hydroxy stearamide), erucamide, oleamide, and ethylene bis oleamide, preferably ethylene bis(stearamide). In this case, impact strength, fluidity, and appearance quality may be excellent.

The ASA-based resin composition of the present invention preferably does not include a stearate-based lubricant, that is, stearate-based lubricant-free. In this case, a molded article having an aesthetically pleasing appearance and high gloss may be obtained.

For example, the stearate-based lubricant may include one or more selected from the group consisting of barium stearate, calcium stearate, magnesium stearate, zinc stearate, and stearic acid.

In the present disclosure, 'stearate-based lubricant-free' means that no stearate-based lubricant is intentionally added during the preparation of the ASA-based resin composition.

For example, other additives other than the lubricant may include one or more selected from the group consisting of a heat stabilizer, a UV stabilizer, a fluorescent brightening agent, a chain extender, a release agent, a pigment, a dye, an antibacterial agent, a processing aid, a metal deactivator, a smoke suppressant, an inorganic filler, glass fiber, an antifriction agent, and an anti-wear agent. For example, based on 100 % by weight of all components (A+B+C+other additives) constituting the ABS-based resin composition, each of other additives may be included in an amount of 0.1 to 5 % by weight, preferably 1 to 3 % by weight. In this case, the functions of the additives may be efficiently expressed without degrading the intrinsic physical properties of the ASA-based resin composition of the present invention.

For example, based on 100 % by weight of all components (A+B+C+heat stabilizer) constituting the ABS-based resin composition, the heat stabilizer may be included in an amount of preferably 0.1 to 2 % by weight, more preferably 0.2 to 1.5 % by weight. Within this range, heat resistance may be improved.

For example, the heat stabilizer may include one or more selected from the group consisting of a phenol-based heat stabilizer, a phosphite-based heat stabilizer, and a thioether-based heat stabilizer, preferably a phenol-based heat stabilizer and/or a phosphite-based heat stabilizer.

For example, the phenol-based heat stabilizer may include one or more selected from the group consisting of tetrakis methylene 3-(3,5-di-tert-butyl-4-hydroxyphenyl)propionate methane, 1,3,5-tris-(4-t-butyl-3-hydroxy-2,6-dimethylbenzyl)-1,3,5-triazine-2,4,6-(1H,3H,5H)-trione, and 1,3,5-tris-(3,5-di-t-butyl-4-hydroxybenzyl)-s-triazine-2,4,6-(1H,3H,5H)-trione.

For example, the phosphite-based heat stabilizer may be tris(nonylphenyl)phosphite, tris-(2,4-di-tert-butylphenyl) phosphite, bis(2,4-di-tert-butylphenyl)pentaerythritol diphosphite, or a mixture thereof.

For example, the thioether-based heat stabilizer may include one or more selected from the group consisting of dilauryl thiodipropionate, dimyristyl thiodipropionate, laurylstearyl thiodipropionate, distearyl thiodipropionate, dimethyl thiodipropionate, 2-mercaptobenzimidazole, phenothiazine, octadecyl thioglycolate, butyl thioglycolate, octyl thioglycolate, and thiocresol.

For example, based on 100 % by weight of all components (A+B+C+UV stabilizer) constituting the ABS-based resin composition, the UV stabilizer may be included in an amount of preferably 0.1 to 3 % by weight, more preferably 0.5 to 1.5 % by weight. In this case, weather resistance may be improved.

For example, the UV stabilizer may include a hindered amine-based UV stabilizer (HALS), preferably one or more selected from the group consisting of 1,1-bis(2,2,6,6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzilmalonate, a condensation product of 1-(2-hydroxyethyl)-2,2,6,6-tetramethyl-4-hydroxypiperidine and succinic acid, a linear or cyclic condensation product of N,N'-bis(2,2,6,6-tetramethyl-4-piperidyl)hexamethylene diamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, a linear or cyclic condensation product of N,N'-bis(2,2,6,6-tetramethyl-4-piperidyl)hexamethylene diamine and 4-morpholino-2,6-dichloro-1,3,5-triazine, a reaction product of 7,7,9,9-tetramethyl-2-cycloundecyl-1-oxa-3,8-diaza-4-oxospiro-[4,5]decane and epichlorohydrin, and poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], more preferably bis(2,2,6,6-tetramethyl-4-piperidyl)sebacate(bis(2,2,6,6-tetramethyl-4-piperidyl) sebacate), 2-(2H-benzotriazole-2-yl)-4-(-(1,1,3,3-tetramethylbutyl)phenol(2-(2H-benzotriazol-2-yl)-4-(1,1,3,3-tetramethylbutyl)phenol), poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof, still more preferably bis(2,2,6,6-tetramethyl-4-piperidyl)sebacate(bis(2,2,6,6-tetramethyl-4-piperidyl), poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof. In this case, weather resistance may be significantly improved without degrading impact resistance and fluidity.

For example, the pigment may be carbon black.

For example, based on 100 % by weight of all components (A+B+C+pigment) constituting the ABS-based resin composition, the pigment may be included in an amount of preferably 0.5 to 5 % by weight, more preferably 1 to 4.5 % by weight, still more preferably 2 to 4.5 % by weight. Within this range, physical property balance and colorability may be excellent.

In addition, the present invention provides an ASA-based resin composition including 20 to 35 % by weight of a post-consumer recycled ABS resin; 5 to 22 % by weight of an acrylate-aromatic vinyl compound-vinyl cyanide compound graft copolymer containing an acrylate rubber having an average particle diameter of 200 to 320 nm; 5 to 25 % by weight of an acrylate-aromatic vinyl compound-vinyl cyanide compound graft copolymer containing an acrylate rubber having an average particle diameter of 40 to 109 nm; 30 to 60 % by weight of a styrene-based copolymer having a weight average molecular weight of 80,000 to 100,000 g/mol; and 0 to 15 % by weight of a styrene-based copolymer having a weight average molecular weight of 150,000 to 200,000 g/mol.

The post-consumer recycled ABS resin may include 55 to 65 % by weight of an aromatic vinyl monomer, 10 to 20 % by weight of a diene rubber, and 15 to 25 % by weight of a vinyl cyanide compound. Alternatively, the post-consumer recycled ABS resin may may be a mechanically recycled resin obtained by changing the physical structure of a waste ABS resin having a weight average molecular weight of 100,000 to 300,000 g/mol without changing the chemical structure thereof, sorting a raw material, and performing reprocessing.

The ASA-based resin composition may include the acrylate-aromatic vinyl compound-vinyl cyanide compound graft copolymer containing an acrylate rubber having an average particle diameter of 200 to 320 nm and the acrylate-aromatic vinyl compound-vinyl cyanide compound graft copolymer containing an acrylate rubber having an average particle diameter of 40 to 109 nm in a weight ratio of 1:0.8 to 1:1.5.

For example, the ASA-based resin composition may have a melt flow index of 8 g/10 min or more, preferably 8.8 to 9.5 g/10 min as measured at 220 °C and 10 kg for 10 minutes using MI-4 (GOTTFEST Co.) according to ISO1133. Within this range, physical property balance, scratch resistance, colorability, and appearance quality may be excellent.

For example, the ASA-based resin composition may have an Izod impact strength of 10 kJ/m² or more, preferably 10 to 15 kJ/m² as measured at 23 °C using a specimen having a thickness of 4 mm according to ISO 179. Within this range, physical property balance and scratch resistance may be excellent.

For example, the ASA-based resin composition may have a heat deflection temperature (HDT) of 84 °C or higher, preferably 84 to 86 °C as measured using Auto HDT Tester 6A-2 (Manufacturer: TOYOSEIKI) according to ISO 75-1,2. Within this range, heat resistance properties may be excellent without affecting mechanical strength.

The ASA-based resin composition may have a hardness of 100 or more, preferably 102 to 105 as measured according to ISO 2039. Within this range, physical property balance and scratch resistance may be excellent.

When a specimen is irradiated with 2500 kJ energy according to the SAE J2527 evaluation method, the colors before and after the irradiation are measured using a color difference meter in the SCI Mode, and the weather resistance (SCI ΔE) is calculated, the ASA-based resin composition has a weather resistance (SCI ΔE) of 3 or less, preferably 0.99 to 1.63. Within this range, physical property balance and weather resistance may be excellent.

In addition, the present invention provides an ASA-based resin composition including an acrylate-aromatic vinyl compound-vinyl cyanide compound graft copolymer and a vinyl cyanide compound-conjugated diene compound-aromatic vinyl compound graft copolymer and including 10 to 20 % by weight of an alkyl acrylate, 20 to 40 % by weight of an aromatic vinyl compound, 20 to 30 % by weight of a vinyl cyanide compound, 1 to 10 % by weight of a conjugated diene compound, and 20 to 40 % by weight of an alkyl-substituted aromatic vinyl compound.

In addition, the present invention provides an ASA-based resin composition including an acrylate-aromatic vinyl compound-vinyl cyanide compound graft copolymer and a vinyl cyanide compound-conjugated diene compound-aromatic vinyl compound graft copolymer and including 11 to 15 % by weight of an alkyl acrylate, 26 to 34 % by weight of an aromatic vinyl compound, 23 to 24 % by weight of a vinyl cyanide compound, 3 to 6 % by weight of a conjugated diene compound, and 25 to 33 % by weight of an alkyl-substituted aromatic vinyl compound.

In addition, the present invention provides an ASA-based resin composition including an acrylate-aromatic vinyl compound-vinyl cyanide compound graft copolymer and a vinyl cyanide compound-conjugated diene compound-aromatic vinyl compound graft copolymer and including 13 to 15 % by weight of an alkyl acrylate, 27 to 32 % by weight of an aromatic vinyl compound, 23 to 24 % by weight of a vinyl cyanide compound, 3 to 6 % by weight of a conjugated diene compound, and 27 to 32 % by weight of an alkyl-substituted aromatic vinyl compound.

### Method of preparing ASA-based resin composition

For example, a method of preparing an ASA-based resin composition according to the present invention includes a step of kneading and extruding an ASA-based resin and a post-consumer recycled ABS resin at 200 to 300 °C and 300 to 800 rpm. In this case, despite including the post-consumer recycled ABS resin, excellent mechanical properties and excellent physical property balance between heat resistance and weather resistance may be provided.

As a preferred example, the method of the present invention may include a step of kneading and extruding, at 200 to 300 °C and 300 to 800 rpm, 20 to 35 % by weight of a post-consumer recycled ABS resin; 5 to 22 % by weight of an acrylate-aromatic vinyl compound-vinyl cyanide compound graft copolymer (ASA-based resin) containing an acrylate rubber having an average particle diameter of 200 to 320 nm; 5 to 25 % by weight of an acrylate-aromatic vinyl compound-vinyl cyanide compound graft copolymer (ASA-based resin) containing an acrylate rubber having an average particle diameter of 40 to 109 nm; 30 to 60 % by weight of a styrene-based copolymer having a weight average molecular weight of 80,000 to 100,000 g/mol; and 0 to 15 % by weight of a styrene-based copolymer having a weight average molecular weight of 150,000 to 200,000 g/mol. In this case, despite including the post-consumer recycled ABS resin, excellent mechanical properties and excellent physical property balance between heat resistance and weather resistance may be provided.

The method of preparing an ASA-based resin composition hares all the technical features of the above-described ASA-based resin composition. Therefore, the description of the overlapping parts will be omitted.

The step of preparing pellets using an extrusion kneader is preferably performed at 200 to 300 °C in a size of 25 to 75 pi, more preferably at 220 to 260°C in a size of 20 to 70 pi. Within this range, stable extrusion is possible and the mixing effect is excellent. At this time, the temperature is the temperature set in the cylinder, and pi means the outer diameter (unit: mm).

An extrusion kneader commonly used in the technical field to which the present invention belongs may be used in the present invention without particular limitation. Preferably, a two-axis extrusion kneader may be used.

### Molded article

For example, a molded article of the present invention includes the ASA-based resin composition of the present invention. In this case, compared to conventional ASA-based resin compositions, despite including a post-consumer recycled ABS resin, mechanical properties and the physical property balance between heat resistance and weather resistance may be excellent.

A method of manufacturing a molded article according to the present invention includes a step of injecting pellets manufactured using the method of preparing an ASA-based resin composition at an injection temperature of 200 to 300 °C under an injection pressure of 60 to 100 bar and a holding pressure of 30 to 65 bar. In this case, an injection-molded article with high impact strength may be easily manufactured.

The injection temperature may be preferably 220 to 280 °C, more preferably 230 to 270 °C. Within this range, injection-molded articles requiring complex designs may be easily manufactured.

The injection pressure may be preferably 70 to 90 bar, more preferably 75 to 85 bar. Within this range, injection-molded articles requiring complex designs may be easily manufactured.

The holding pressure may be preferably 35 to 60 bar, more preferably 40 to 55 bar. Within this range, injection-molded articles requiring complex designs may be easily manufactured.

Pellets obtained by the method of preparing an ASA-based resin composition may have a residual emulsifier content (based on weight) of 5,000 ppm or less, as a specific example 1,000 to 4,000 ppm, 1,000 to 3,000 ppm, or 1,000 to 1,900 ppm. In this case, a luxurious appearance and high gloss may be realized, unpainted injection molding is possible, and processability may be improved due to high fluidity.

For example, the molded article may be an automobile exterior material, preferably a radiator grille, a side mirror cover, a pillar part, or the like.

In describing the ASA-based resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

The materials used in the following examples and additional examples are as follows.
* Graft copolymer (A-1): An ASA graft copolymer (butyl acrylate: 40 % by weight, styrene: 46.5 % by weight, and acrylonitrile: 13.5 % by weight) containing an acrylate rubber having an average particle diameter of 300 nm
* Graft copolymer (A-2): An ASA graft copolymer (butyl acrylate: 50 % by weight, styrene: 36.5 % by weight, and acrylonitrile: 13.5 % by weight) containing an acrylate rubber having an average particle diameter of 90 nm
* Styrene-based copolymer (B)
   An aromatic vinyl compound-vinyl cyanide compound copolymer (B-1) (styrene: 70 % by weight and acrylonitrile: 30 % by weight, weight average molecular weight: 95,000 g/mol)
   An aromatic vinyl compound-vinyl cyanide compound copolymer (B-2) (styrene: 73 % by weight and acrylonitrile: 27 % by weight, weight average molecular weight: 130,000 g/mol)
* Post-consumer recycled ABS resin (C): A mechanically recycled resin (product name: AB3010, Manufacturer: Daeil Suji) including 60 parts by weight of styrene, 15 parts by weight of butadiene rubber, and 25 parts by weight of acrylonitrile and obtained by sorting raw materials without changing chemical structure thereof and performing reprocessing
* Additive 1: Ethylene bis(stearamide) lubricant
* Additive 2: UV stabilizer
* Additive 3: Black pigment

### Examples 1 to 4, and Additional Examples 1 to 4

According to the contents (parts by weight) shown in Tables 1 and 2 below, the components shown in Tables 1 and 2 were fed into a twin-screw extruder. Based on 100 parts by weight in total of the above-described components (A-1), (A-2), (B-1), and (B-2), the additives 1, 2, and 3 were added in the corresponding amounts (parts by weight).

Then, kneading and extrusion were performed at a cylinder temperature of 240 °C to obtain pellets, and melt flow index was measured using the obtained pellets.

The obtained pellets were injected at an injection temperature of 240 °C using an injection machine (Engel Co., 120MT) to manufacture a specimen for measuring physical properties.

### [Test Examples]

The properties of the specimens manufactured in Examples 1 to 4 and Additional Examples 1 to 4 were measured by the following methods, and the results are shown in Tables 1 and 2 below.

### Measurement methods

* Izod impact strength (kJ/m²): Izod impact strength was measured at 23 °C using a specimen having a thickness of 4 mm according to ISO 179.
* Melt flow index (g/10 min): Melt flow index was measured at 220 °C under a load of 10 kg for 10 minutes using MI-4 (GOTTFERT Co.) according to ISO 1133.
* Heat deflection temperature (HDT, °C): Heat deflection temperature was measured using Auto HDT Tester 6A-2 equipment (TOYOSEIKI Co.) according to ISO 75-1,2.
* Hardness: Hardness was measured according to ISO 2039.
* Weather resistance: The evaluation was conducted for 2500 kJ of light under SAE J2527 conditions, and the △E of the glossy surface of the specimen before and after the evaluation was measured.

**[Table 1]**

| Classification (parts by weight) | Example 1 | Example 2 | Example 3 | Example 4 |
|---|---|---|---|---|
| Graft copolymer (A-1) | 18 | 18 | 21 | 18 |
| Graft copolymer (A-2) | 24 | 24 | 21 | 24 |
| Styrene-based copolymer (B-1) | 58 | 48 | 58 | 58 |
| Styrene-based copolymer (B-2) | - | 10 | - | - |
| Post-consumer recycled ABS resin (C) | 28 | 28 | 28 | 48 |
| (C) Content (% by weight) | 22 | 22 | 22 | 32 |
| (Additive 1) | 1 | 1 | 1 | 1 |
| (Additive 2) | 1 | 1 | 1 | 1 |
| (Additive 3) | 4 | 4 | 4 | 4 |
| Izod impact strength | 10.1 | 10.7 | 10.6 | 10.2 |
| Melt flow index | 8.8 | 9.4 | 8.7 | 9.8 |
| Heat deflection temperature | 85.6 | 84.2 | 86 | 85.2 |
| Hardness | 104 | 102 | 103 | 104 |
| Weather resistance *(ΔE)* | 0.99 | 1.2 | 1.1 | 1.63 |

**[Table 2]**

| Classification | Additional Example 1 | Additional Example 2 | Additional Example 3 | Additional Example 4 |
|---|---|---|---|---|
| Graft copolymer (A-1) | 15 | 18 | 23 | 16 |
| Graft copolymer (A-2) | 26 | 24 | 19 | 26 |
| Styrene-based copolymer (B-1) | 59 | 58 | 58 | 58 |
| Styrene-based copolymer (B-2) | - | - | - | - |
| Post-consumer recycled ABS resin (C) (parts by weight) | 28 | 68 | 28 | 28 |
| (C) Content (% by weight) | 22 | 40 | 22 | 22 |
| (Additive 1) | 1 | 1 | 1 | 1 |
| (Additive 2) | 1 | 1 | 1 | 1 |
| (Additive 3) | 4 | 4 | 4 | 4 |
| Izod impact strength | 9.6 | 9.8 | 11.7 | 8.8 |
| Melt flow index | 10.2 | 10.8 | 8.0 | 9.8 |
| Heat deflection temperature | 87.2 | 82 | 87 | 86 |
| Hardness | 106 | 105 | 99 | 105 |
| Weather resistance *(ΔE)* | 0.75 | 3.15 | 2.0 | 0.9 |

In Tables 1 and 2, the content (% by weight) of (C) is a value obtained by converting the input amount (parts by weight) of (C) into % by weight based on 100 % by weight in total of (A-1), (A-2), (B-1), (B-2), and (C).

In addition, the monomer composition ratios of Examples 1 to 4 in Table 1 and Additional Examples 1 to 4 in Table 2 were converted and shown in Table 3 below.

**[Table 3]**

| Classifi cation | Examp le1 | Examp le2 | Examp le3 | Examp le4 | Additi onal Exampl e1 | Additi onal Exampl e2 | Additi onal Exampl e3 | Additi onal Exampl e4 |
|---|---|---|---|---|---|---|---|---|
| BA | 15 | 15 | 15 | 13 | 15 | 11 | 15 | 15 |
| SM | 27 | 32 | 27 | 31 | 26 | 34 | 27 | 26 |
| AN | 23 | 23 | 23 | 23 | 23 | 24 | 23 | 23 |
| BD | 3 | 3 | 3 | 5 | 3 | 6 | 3 | 3 |
| AMS | 32 | 27 | 32 | 28 | 33 | 25 | 32 | 32 |
| Sum | 100 | 100 | 100 | 100 | 100 | 100 | 100 | 100 |

In Table 3, BA stands for butyl acrylate, SM stands for styrene, AN stands for acrylonitrile, BD stands for butadiene, and AMS stands for alkyl methyl styrene.

As shown in Tables 1 and 2, among examples according to the present invention, Examples 1 to 4 exhibited hardness equivalent to or superior to that of Additional Examples 1 to 4. In addition, in the case of Examples 1 to 4, melt flow index, heat resistance, and Izod impact strength were excellent, and weather resistance was improved. Thus, the deterioration of surface properties that may occur during molding processing was prevented, and the appearance quality was excellent even in harsh external environments.

In particular, in the case of Example 2 using the graft copolymers (A-1) and (A-2) and a combination of two different styrene-based copolymers (B-1) and (B-2) having different weight average molecular weights, compared to Example 1 using the graft copolymers (A-1) and (A-2) and the styrene-based copolymer (B-1) alone, impact strength was improved.

In addition, in the case of Additional Example 1 using the graft copolymer (A-1) in an amount less than the range according to the present invention and the graft copolymer (A-2) in an amount exceeding the range according to the present invention, impact strength was poor.

In addition, in the case of Additional Example 2 using the post-consumer recycled ABS resin (C) in an amount exceeding the range according to the present invention, impact strength and heat resistance were reduced, and weather resistance was poor.

In addition, in the case of Additional Example 3 using the graft copolymer (A-1) in an amount exceeding the range according to the present invention, fluidity and hardness were poor.

In addition, in the case of Additional Example 4 using the graft copolymer (A-2) in an amount exceeding the range according to the present invention, impact strength and fluidity were poor.

In conclusion, despite using a post-consumer recycled ABS resin, by including the post-consumer recycled ABS resin, graft copolymers containing acrylate rubbers having different average particle diameters, and a styrene-based copolymer having a predetermined weight average molecular weight in a predetermined content ratio, due to the synergistic effects of this combination, a resin composition having excellent mechanical properties such as impact resistance and hardness, heat resistance, fluidity, and weather resistance, having environmentally friendly effects compared to conventional ASA-based resin compositions, having improved physical properties, and being suitable for automobile exteriors may be provided.

## Claims

1. An ASA-based resin composition, comprising an acrylate-aromatic vinyl compound-vinyl cyanide compound graft copolymer (A); a styrene-based copolymer (B); and a post-consumer recycled ABS resin (C),
wherein the post-consumer recycled ABS resin (C) is comprised in an amount of 20 to 70 % by weight.

2. The ASA-based resin composition according to claim 1, wherein the acrylate-aromatic vinyl compound-vinyl cyanide compound graft copolymer (A) comprises an acrylate-aromatic vinyl compound-vinyl cyanide compound graft copolymer (A-1) containing an acrylate rubber having an average particle diameter of 200 to 320 nm and an acrylate-aromatic vinyl compound-vinyl cyanide compound graft copolymer (A-2) containing an acrylate rubber having an average particle diameter of 40 to 109 nm.

3. The ASA-based resin composition according to claim 1, wherein the styrene-based copolymer (B) is a mixture of a styrene-based copolymer (B-1) having a weight average molecular weight of 80,000 to 100,000 g/mol and a styrene-based copolymer (B-2) having a weight average molecular weight of 150,000 to 200,000 g/mol.

4. The ASA-based resin composition according to any one of claims 1 to 3, wherein the post-consumer recycled ABS resin (C) comprises 55 to 65 parts by weight of an aromatic vinyl monomer, 10 to 20 parts by weight of a diene rubber, and 15 to 25 parts by weight of a vinyl cyanide compound, or has a weight average molecular weight of 100,000 to 300,000 g/mol, or is a mechanically recycled resin.

5. The ASA-based resin composition according to any one of claims 1 to 3, wherein the acrylate-aromatic vinyl compound-vinyl cyanide compound graft copolymer (A-1) containing an acrylate rubber having an average particle diameter of 200 to 320 nm and the acrylate-aromatic vinyl compound-vinyl cyanide compound graft copolymer (A-2) containing an acrylate rubber having an average particle diameter of 40 to 109 nm are comprised in a weight ratio (A-1:A-2) of 1:0.8 to 1:1.5.

6. The ASA-based resin composition according to claim 2, wherein, based on 100 % by weight in total thereof, the acrylate-aromatic vinyl compound-vinyl cyanide compound graft copolymer (A-1) containing an acrylate rubber having an average particle diameter of 200 to 320 nm comprises 30 to 50 % by weight of an acrylate rubber, 40 to 60 % by weight of an aromatic vinyl compound, and 5 to 20 % by weight of a vinyl cyanide compound.

7. The ASA-based resin composition according to claim 2, wherein, based on 100 % by weight in total thereof, the acrylate-aromatic vinyl compound-vinyl cyanide compound graft copolymer (A-2) containing an acrylate rubber having an average particle diameter of 40 to 109 nm comprises 40 to 60 % by weight of an acrylate rubber, 25 to 45 % by weight of an aromatic vinyl compound, and 5 to 20 % by weight of a vinyl cyanide compound.

8. The ASA-based resin composition according to claim 3, wherein, based on 100 % by weight in total thereof, the styrene-based copolymer (B-1) having a weight average molecular weight of 80,000 to 100,000 g/mol comprises 55 to 75 % by weight of an aromatic vinyl compound and 25 to 45 % by weight of a vinyl cyanide compound.

9. The ASA-based resin composition according to claim 3, wherein, based on 100 % by weight in total thereof, the styrene-based copolymer (B-2) having a weight average molecular weight of 150,000 to 200,000 g/mol comprises 60 to 80 % by weight of an aromatic vinyl compound and 20 to 40 % by weight of a vinyl cyanide compound.

10. The ASA-based resin composition according to claim 1, wherein the ASA-based resin composition has a melt flow index (220 °C, load: 10 kg) of 8.8 to 9.8 g/10 minutes as measured according to ISO 1133, an Izod impact strength of 10.1 to 10.7 kJ/m² as measured according to ISO 179, an HDT of 84.2 to 86 °C as measured according to ISO 75-1,2, a hardness of 102 to 104 as measured according to ISO 2039, or a weather resistance (SCI △E) of 0.99 to 1.63 as measured using an SAE J2527 evaluation method.

11. An ASA-based resin composition, comprising:
5 to 22 % by weight of an acrylate-aromatic vinyl compound-vinyl cyanide compound graft copolymer (A-1) containing an acrylate rubber having an average particle diameter of 200 to 320 nm;
5 to 25 % by weight of an acrylate-aromatic vinyl compound-vinyl cyanide compound graft copolymer (A-2) containing an acrylate rubber having an average particle diameter of 40 to 109 nm;
30 to 60 % by weight of a styrene-based copolymer (B-1) having a weight average molecular weight of 80,000 to 100,000 g/mol;
0 to 15 % by weight of a styrene-based copolymer (B-2) having a weight average molecular weight of 150,000 to 200,000 g/mol; and
20 to 35 % by weight of an aromatic vinyl compound-conjugated diene compound-vinyl cyanide compound graft copolymer (C).

12. The ASA-based resin composition according to claim 11, wherein the aromatic vinyl compound-conjugated diene compound-vinyl cyanide compound graft copolymer (C) has a melt-volume flow rate (MVR) of 10 cm³/10 min or more as measured at 220 °C and 10 kg using polymer melt according to ISO 1133-1:2011; a Vicat B/50 softening point of 80 °C or higher as measured according to ISO 306:2004; an E-modulus of 1500 MPa or more as measured according to ISO 527; a stress-at-yield of 30 MPa or more as measured according to ISO 527; a strain-at-yield of 2 % or more as measured according to ISO 527; a Charpy notch impact strength of 2 kJ/m² or more as measured according to notch type A at 23 °C according to EN-ISO 179-1; or a Charpy notch impact strength of 2 kJ/m² or more as measured according to notch type A at -30 °C according to EN-ISO 179-1.

13. An ASA-based resin composition, comprising:
an acrylate-aromatic vinyl compound-vinyl cyanide compound graft copolymer and a vinyl cyanide compound-conjugated diene compound-aromatic vinyl compound graft copolymer,
wherein the ASA-based resin composition comprises 10 to 20 % by weight of an alkyl acrylate, 20 to 40 % by weight of an aromatic vinyl compound, 20 to 30 % by weight of a vinyl cyanide compound, 1 to 10 % by weight of a conjugated diene compound, and 20 to 40 % by weight of an alkyl-substituted aromatic vinyl compound.

14. A method of preparing an ASA-based resin composition, comprising kneading and extruding, at 200 to 300 °C and 300 to 800 rpm, 5 to 22 % by weight of an acrylate-aromatic vinyl compound-vinyl cyanide compound graft copolymer (A-1) containing an acrylate rubber having an average particle diameter of 200 to 320 nm; 5 to 25 % by weight of an acrylate-aromatic vinyl compound-vinyl cyanide compound graft copolymer (A-2) containing an acrylate rubber having an average particle diameter of 40 to 109 nm; 30 to 60 % by weight of a styrene-based copolymer (B-1) having a weight average molecular weight of 80,000 to 100,000 g/mol; 0 to 15 % by weight of a styrene-based copolymer (B-2) having a weight average molecular weight of 150,000 to 200,000 g/mol; and 20 to 35 % by weight of a post-consumer recycled ABS resin (C).

15. A molded article, comprising the ASA-based resin composition according to any one of claims 1 to 3 or claims 6 to 13.
